# EUROPÄISCHE PATENTSCHRIFT

(11) **EP 2 800 538 B1**
(45) Veröffentlichungstag und Bekanntmachung des Hinweises auf die Patenterteilung: **09.08.2017**
(21) Anmeldenummer: 12812522.6
(22) Anmeldetag: 12.12.2012
(51) Int. Cl.: A61C 8/00

(54) **DENTALIMPLANTAT**
DENTAL IMPLANT
IMPLANT DENTAIRE

(30) Priorität: 06.01.2012 DE 102012000136
(43) Veröffentlichungstag der Anmeldung: 12.11.2014
(73) Patentinhaber: Heraeus Kulzer GmbH, 63450 Hanau (DE)
(72) Erfinder: WOLDEGERGIS, Yohannes, 63457 Hanau (DE); BAUER, Christian, 63825 Westerngrund (DE)
(74) Vertreter: Bendele, Tanja
(86) Internationale Anmeldenummer: PCT/EP2012/005122
(87) Internationale Veröffentlichungsnummer: WO 2013/102474

(56) Entgegenhaltungen:
- DE-A1- 10 201 817
- DE-A1- 10 358 680
- DE-U1-202004 016 896

## Beschreibung

Die Erfindung betrifft ein Dentalimplantat umfassend einen Implantatadapter und eine Suprakonstruktion.

Dentalimplantate und Suprakonstruktionen werden in der Zahnmedizin eingesetzt, um extrahierte oder ausgefallene Zähne zu ersetzen. Dazu werden die Dentalimplantate in einen Kieferknochen eingesetzt. Aus der DE 103 58 680 A1 ist ein Zahnersatz bekannt, bei dem ein Schaft in den Kieferknochen verankert wird und eine Suprakonstruktion auf dem koronalen Bereich des Schafts durch einen Klebeverbund fixierbar ist. Es ist üblich, den Schaft und die Suprakonstruktion mit einer Schraube zu verbinden. Als Klebeverbunde werden beispielsweise Zemente eingesetzt.

Unter einer koronalen Anordnung wird eine Anordnung verstanden, die in Richtung der Zahnkrone, beispielsweise in Richtung der Kaufläche angeordnet ist. Im Gegensatz dazu ist eine apikale Anordnung zur Wurzelspitze des Zahns ausgerichtet, also in Richtung des Kieferknochens ausgerichtet. Koronale und apikale Anordnungen eines Dentalimplantats sind also in entgegengesetzter Richtung zueinander angeordnet. Bezüglich nicht implantierter Dentalimplantate beziehen sich diese Richtungsangaben auf diejenigen Richtungen, die sich bei einem ordnungsgemäßen Einsetzen eines solchen Dentalimplantats in einen Kieferknochen eines Patienten ergeben würden, beziehungsweise beziehen sich auf den nachgebildeten Zahn.

Abhängig von der Patientensituation, beispielsweise der Lage des Kieferknochens und den Ungenauigkeiten bei der Operation am Kiefer, kann es dazu kommen, dass der Schaft nicht ideal für den Zahnersatz ausgerichtet ist. Durch Verwenden eines Abdrucks sowie durch die Verwendung eines Klebstoffs oder Zements kann die Suprakonstruktion beziehungsweise der eigentliche Zahnersatz, das heißt ein Steg, eine Krone, eine Brücke oder ein Abutment auch einschließlich einer Prothese, noch ausgerichtet werden.

Nachteilig ist hieran, dass ein Zement beziehungsweise Klebstoff am Patienten angewendet werden muss. Häufig müssen die betreffenden Teile nachbearbeitet werden, um an die Situation im Mundraum angepasst zu werden. Durch eine solche nachträgliche Ausrichtung kann es zu einer nicht optimalen Belastung des Dentalimplantats und dadurch zu Schmerzen, reduzierter Haltbarkeit und anderen Problemen mit dem Zahnersatz kommen. Zudem müssen oft längere Wartezeiten bei der Überarbeitung des Aufbaus und/oder beim Aushärten des Klebstoffs oder des Zements in Kauf genommen werden.

Aus DE 20 2004 016 896 U1 ist ein Dentalimplantat mit einem koronal gewölbten Implantatadapter und einer apikal gewölbten Suprakonstruktion bekannt, wobei die apikale Krümmung der Suprakonstruktion konvex und die koronale Krümmung des Implantatadapters konkav ist.

Die Aufgabe der Erfindung besteht also darin, die Nachteile des Stands der Technik zu überwinden. Insbesondere soll eine schnell und leicht einzusetzende Suprakonstruktion bereitgestellt werden, dessen Ausrichtung leicht an die Gegebenheiten im Mundraum eines Patienten angepasst werden kann. Möglichst soll das Dentalimplantat ohne Zement oder einen Klebstoff auskommen. Des Weiteren soll der Aufbau des Dentalimplantats möglichst einfach und ohne Wartezeiten durchführbar sein.

Die Aufgabe wird dadurch gelöst, dass der Implantatadapter koronal zumindest bereichsweise gewölbt ist und die Suprakonstruktion apikal zumindest bereichsweise gewölbt ist, wobei die apikale Krümmung der Suprakonstruktion konvex ist und die koronale Krümmung des Implantatadapters konkav ist oder die apikale Krümmung der Suprakonstruktion konkav ist und die koronale Krümmung des Implantatadapters konvex ist, wobei die konkave Krümmung stärker als die konvexe Krümmung ist, so dass beim aufgebauten Dentalimplantat die Suprakonstruktion mit dem Implantatadapter über eine Schneidkante verbunden ist.

Unter einem Dentalimplantat ist erfindungsgemäß nicht das vollständige Implantat mit Prothese und Schaft zu verstehen. Ein Dentalimplantat ist im Sinne der vorliegenden Erfindung also bereits durch eine Suprakonstruktion und einen Implantatadapter verwirklicht. Zusätzlich kann ein erfindungsgemäßes Dentalimplantat aber auch einen Schaft und/oder eine Zahnprothese umfassen. Suprakonstruktionen sind erfindungsgemäß als Stege, Brücken, Abutments und andere Aufbauten für den implantierten Schaft zu verstehen.

Erfindungsgemäß kann dabei vorgesehen sein, dass die konvexe Krümmung mit einem ersten Radius R1 konvex gewölbt ist und die konkave Krümmung mit einem zweiten Radius R2 konkav gewölbt ist, wobei der erste Radius R1 größer als der zweite Radius R2 ist.

Eine radiale Krümmung hat den Vorteil, dass sie technisch einfach aufzubauen ist und dass definierte Kontaktpunkte, beziehungsweise eine definierte Kontaktlinie als Schneidkante entsteht.

Die Krümmung muss zumindest einen Bereich der genannten Oberflächen abdecken. Vorzugsweise bilden die Ränder einer der gekrümmten Flächen die Schneidkante auf der anderen gekrümmten Fläche. Radiale Krümmungen können beispielsweise durch Kugelflächen oder Zylindermäntel gebildet werden. Hierbei sind erfindungsgemäß jeweils keine vollen Kugelflächen oder Zylindermäntel gemeint sondern Teilbereiche von Kugeloberflächen oder Zylindermänteln.

Bei den gekrümmten Oberflächen kann vorgesehen sein, dass die Radien R1 und R2 zwischen 1 mm und 500 mm sind, vorzugsweise zwischen 1,5 mm und 300 mm, besonders bevorzugt zwischen 5 mm und 100 mm.

Bei diesen Radien ergibt sich für die Dentalimplantate eine ausreichende Krümmung bezogen auf die Größe der Dentalimplantate und gleichzeitig eine ausreichende Krümmung, um eine Schneidkante bereitzustellen.

Ferner kann besonders bevorzugt vorgesehen sein, dass die konvexe Krümmung eine konvexe Kugeloberfläche mit dem ersten Radius R1 ist und die konkave Krümmung eine konkave Kugeloberfläche mit dem zweiten Radius R2 ist.

Bei der Verwendung von Kugeloberflächen kann die Suprakonstruktion einen Winkelfehler nicht nur in einer Richtung ausgleichen sondern in jeder Richtung. Die Kugeloberflächen können in jeder Richtung zueinander geneigt werden, so dass der Winkel der Suprakonstruktion gegen den Implantatadapter beziehungsweise den Schaft, auf dem der Implantatadapter angeordnet ist, bezüglich seiner Ausrichtung beliebig eingestellt werden kann. Auch hier bezieht sich der Begriff Kugeloberfläche nicht auf eine volle Kugel sondern auf einen Teil einer Kugeloberfläche. Vorzugsweise ist die Kugeloberfläche kleiner als eine Halbkugel mit dem gleichen Radius.

Bei Dentalimplantaten mit radialen Krümmung kann vorgesehen sein, dass das Verhältnis der Radien R1 zu R2 kleiner als 2:1 ist, vorzugsweise im Bereich von 20:19 bis 2:1 liegt, besonders bevorzugt im Bereich von 10:9 bis 4:3, ganz besonders bevorzugt das Verhältnis der Radien R1 zu R2 7:6 ist.

Bei diesen Verhältnissen der Krümmungsradien beziehungsweise der Radien der Kugeloberflächen ergeben sich ausreichende Schneidkanten bei gleichzeitig kompakter und vor allem in Längsrichtung niedriger Bauweise des Dentalimplantats.

Erfindungsgemäß ist vorgesehen, dass die gekrümmten Oberflächen einen unterschiedlichen Durchmesser aufweisen, so dass beim aufgebauten Dentalimplantat der äußere Rand der Oberfläche mit dem kleineren Durchmesser als Schneidkante in die Oberfläche mit dem größeren Durchmesser einschneidet, wobei vorzugsweise der äußere Rand der konkaven gekrümmten Oberfläche einen kleineren Durchmesser als der äußere Rand der konvexen Oberfläche aufweist, wobei der äußere Rand der konkaven gekrümmten Oberfläche die Schneidkante auf der konvexen Oberfläche bildet.

Hierdurch wird sichergestellt, dass die Schneidkante in die anliegende gekrümmte Oberfläche einschneiden kann, vorzugsweise vollumfänglich. Ein großer Schneidkantenbereich führt zu einer stabilen und vor allem auch dichteren Verbindung. Die Dichtigkeit der Verbindung spielt wegen möglichem Festsetzen von Speiseresten und anderer Keimherde in Undichtigkeiten und Kavitäten eine große Rolle für die Dentalimplantate.

Ferner kann vorgesehen sein, dass das der Implantatadapter mit der konvexen koronalen Oberfläche aus einem weicheren Material besteht als die Suprakonstruktion oder die Suprakonstruktion mit der konvexen apikalen Oberfläche aus einem weicheren Material besteht als der Implantatadapter.

Auch die unterschiedliche Materialhärte führt zu einem besseren Schneideffekt der Schneidkante. Dadurch werden die Stabilität und die Dichtigkeit der Verbindung verbessert.

Gemäß einer weiteren Ausgestaltung der Erfindung kann vorgesehen sein, dass der Implantatadapter und/oder die Suprakonstruktion aus einer Kobalt-Chrom-Legierung, Titan, einer Titanlegierung und/oder einer Keramik, insbesondere aus einer Zirkonoxid-Keramik, besteht oder bestehen.

Diese Materialien sind für medizinische Anwendungen besonders geeignet und bieten bei geringem Gewicht hohe Stabilität. Die Keramiken werden gerne wegen ihrer hohen Härte und dem ästhetischen Erscheinungsbild verwendet.

Eine besonders bevorzugte Ausgestaltung der Erfindung kann vorsehen, dass das Dentalimplantat einen Schaft zum Implantieren in den Kieferknochen umfasst, wobei der Implantatadapter auf den Schaft aufsetzbar ist oder mit dem Schaft verbindbar ist oder mit dem Schaft fest verbunden ist oder mit dem Schaft in einem Teil ausgeführt ist.

Mit einem solchen Schaft wird das Dentalimplantat zur Anwendung beim Patienten vervollständigt. Eine feste oder einteilige Verbindung des Schafts mit dem Implantatadapter ist besonders stabil.

Eine ganz besonders bevorzugte Ausgestaltung erfindungsgemäßer Dentalimplantate ergibt sich, wenn vorgesehen ist, dass das Dentalimplantat eine Schraube zum Verbinden der Suprakonstruktion mit dem Implantatadapter umfasst, wobei die Schraube ein Gewinde zum Eingreifen in ein Gegengewinde umfasst, wobei vorzugsweise das Gegengewinde als Innengewinde im Schaft angeordnet ist, und die Suprakonstruktion und der Implantatadapter eine Durchführung für die Schraube umfasst, wobei bevorzugt zumindest der Durchmesser der Durchführung in der Suprakonstruktion größer als der Durchmesser der Schraube im Bereich des Gewindes und kleiner als der Durchmesser eines Schraubenkopfs der Schraube ist.

Die Schrauben sind durch das übertragbare Drehmoment auf die Suprakonstruktion als lineare Kraft besonders gut zur Herstellung einer Verbindung durch die Schneidkante geeignet. Auch der Durchmesser der Durchführung im Implantatadapter kann größer sein, als der Durchmesser der Schraube im Bereich des Gewindes.

Dabei kann vorgesehen sein, dass die Suprakonstruktion eine konvexe koronale Kugelfläche mit einem Radius R3 umfasst und die Schraube an der Unterseite des Schraubenkopfs eine konkave Kugelfläche mit dem gleichen Radius R3 aufweist, so dass ein flächiger Kontakt der Unterseite des Schraubenkopfs mit der koronalen Kugelfläche der Suprakonstruktion bei verschiedenen Winkeln der Suprakonstruktion gegenüber dem Implantatadapter herstellbar ist. Durch diese Maßnahme kann die Kraft von der Schraube vollflächig auf die Suprakonstruktion übertragen werden, unabhängig von der Neigung der Suprakonstruktion gegen den Implantatadapter.

Schließlich kann auch vorgesehen sein, dass beim Aufbau des Dentalimplantats ein Winkel zwischen dem Implantatadapter und der Suprakonstruktion und/oder dem Schaft und der Suprakonstruktion von 0° bis 5° einstellbar ist, vorzugsweise von 0° bis 4°, besonders bevorzugt von 0° bis 3°, ganz besonders bevorzugt von 0° bis 2°.

Diese Winkel ermöglichen einen kompakten Aufbau des Dentalimplantats, wobei sie zum Ausgleichen der meisten Winkelfehler ausreichen.

Der Erfindung liegt die überraschende Erkenntnis zugrunde, dass es durch die Krümmung einer Oberfläche eines Schafts mit einem Implantatadapter beziehungsweise eines Implantatadapters für einen Schaft und eine abweichende Krümmung der Oberfläche der Suprakonstruktion gelingt, ein in der Ausrichtung zum Implantatadapter beziehungsweise zum Schaft variable Suprakonstruktion bereitzustellen, wobei die Suprakonstruktion und der Implantatadapter über ein Schneidkante verbindbar sind. Wenn die Suprakonstruktion mit dem Schaft über den Implantatadapter verbunden wird, beispielsweise indem eine Schraube die Teile zusammenzieht, wird eine äußere Kante der stärker gekrümmten Oberfläche in die weniger stark gekrümmte Oberfläche einschneiden und eine Schneidkante bilden. Grundsätzlich ist es auch möglich, bei einer ausreichend großen Ausnehmung in der weniger stark gekrümmten Oberfläche auch die Kante dieser Ausnehmung der weniger stak gekrümmten Oberfläche in die stärker gekrümmte Oberfläche zu schneiden, was erfindungsgemäß wegen der entstehenden Vorsprünge und Kavitäten jedoch weniger bevorzugt ist. Durch das Ausbilden der Schneidkante kann die Suprakonstruktion in einem gewissen Rahmen in beliebig vielen verschiedenen Winkeln an dem Schaft, beziehungsweise dem Implantatadapter befestigt werden.

Das geschnittene Material sollte weicher als das der Schneidkante sein, damit sich die Schneidkante gut in die gewölbte Oberfläche einschneiden kann, um eine feste und dichte Verbindung zu erzeugen. Die dichte Verbindung sorgt dafür, dass keine Speisereste oder Keime zwischen die Suprakonstruktion und den Implantatadapter gelangen können. Auch deswegen ist eine äußere Schneidkante erfindungsgemäß bevorzugt.

Durch den erfindungsgemäßen Aufbau mit kugelförmigen oder gewölbten Oberflächen gelingt es, Winkelfehler auszugleichen und einen dichten Sitz von Suprakonstruktion zum eigentlichen Implantat (Schaft) zu gewährleisten. Die Dichtigkeit und Stabilität der Verbindung wird durch die unterschiedlichen Krümmungen beziehungsweise die unterschiedlichen Radien und den Schneideeffekt hervorgerufen. Dabei schneidet sich durch das Anzugsmoment einer Schraube (mit Kugelsitz) oder eines anderen Verbindungsmittels die Suprakonstruktion in die Oberfläche des Implantatadapters.

Das erfindungsgemäße Dentalimplantat stellt eine spannungsfreie und einen Winkelfehler ausgleichende Verbindung zwischen einem Dentalimplantat-System mit einem in einem Implantat verankerten Schaft und einer Suprakonstruktion (beispielsweise einer Prothesenkomponente) zur Verfügung, ohne dass Zementwerkstoffe benötigt würden.

Im Folgenden werden Ausführungsbeispiele der Erfindung anhand von zwei schematisch dargestellten Figuren erläutert, ohne jedoch dabei die Erfindung zu beschränken. Dabei zeigt:
- Figur 1:: eine schematische Querschnittansicht eines erfindungsgemäßen Dentalimplantats; und
- Figur 2:: eine vergrößerte Ansicht eines Ausschnitts der schematischen Querschnittansicht des erfindungsgemäßen Dentalimplantats nach Figur 1.

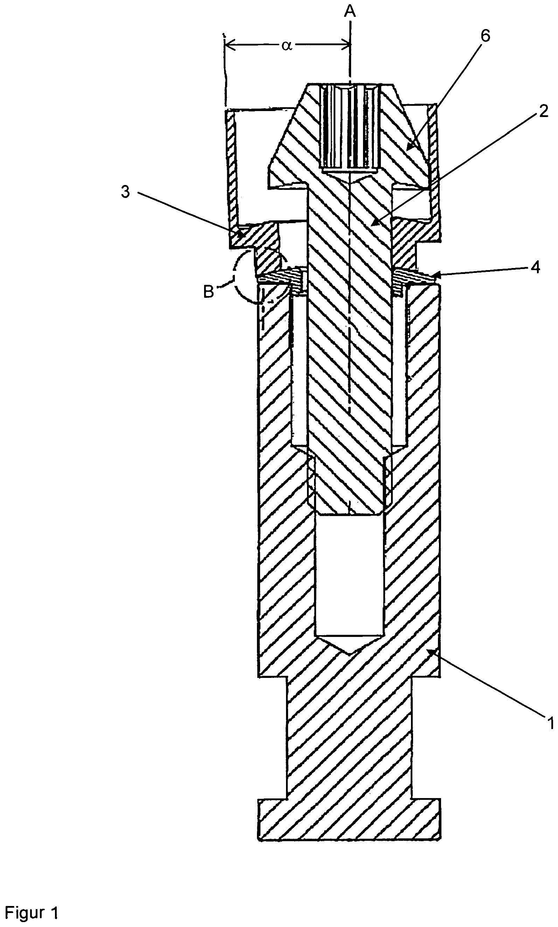

Figur 1 zeigt eine schematische Querschnittansicht eines erfindungsgemäßen Dentalimplantats. Das Dentalimplantat umfasst apikal (in Figur 1 unten) einen Schaft 1, der in einem Kiefer verankert werden kann. Der Schaft 1 umfasst eine Ausnehmung auf der koronalen Seite zur Aufnahme einer Schraube 2. Die Schraube 2 hat dazu ein Außengewinde, das in ein Innengewinde der Ausnehmung im Schaft 1 greift. Die Schraube 2 hat ferner einen Schraubenkopf 6 mit einem Inbus oder einem anderen Eingriffsmittel zum Übertragen eines Drehmoments auf die Schraube 2. Die Schraubenachse A kann die Symmetrieachse des Schafts 1 sein.

Die Schraube 2 dient dazu, eine Suprakonstruktion 3 auf dem Schaft 1 zu befestigen. Als Suprakonstruktion 3 kann der eigentliche Zahnersatz oder eine andere prothetische Versorgung, wie beispielsweise eine Krone, ein Steg, eine Brücke, ein Gebiss oder ein Abutment aufgebaut werden. Um verschiedene Winkel zwischen der Suprakonstruktion 3 und dem Schaft 1 fest einstellen zu können, ist ein Implantatadapter 4 zwischen dem Schaft 1 und der Suprakonstruktion 3 angeordnet. Der Implantatadapter 4 kann flach auf der koronalen Oberfläche des Schafts 1 aufliegen oder fest mit dem Schaft 1 verbunden sein. Es ist auch möglich, den Implantatadapter 4 und den Schaft 1 als ein einziges Bauteil auszuführen.

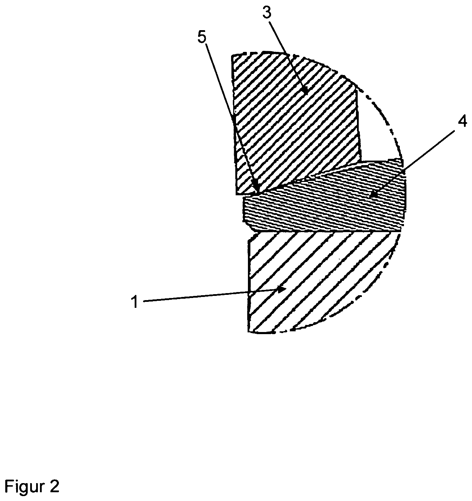

Die koronale Oberfläche des Implantatadapters 4 ist konvex gekrümmt und bildet eine Kugeloberfläche mit einem Radius R1 als Auflage für die Suprakonstruktion 3. Die Suprakonstruktion 3 hat auf der apikalen Seite (in Figur 1 unteren Seite) eine konkave Kugeloberfläche mit einem kleineren Außendurchmesser als die konvexe koronale Kugeloberfläche des Implantatadapters 4 und mit einem kleineren Krümmungsradius R2 (Radius der Kugeloberfläche). Zur besseren Kenntlichmachung dieses Sachverhalts ist der in Figur 1 mit einem Kreis eingerahmte Kontaktbereich B zwischen der Suprakonstruktion 3 und dem Implantatadapter 4 in Figur 2 vergrößert dargestellt.

Die Suprakonstruktion 3 kann in verschiedenen Winkeln □ zur Schraubenachse A in alle Richtungen geneigt auf dem Implantatadapter 4 befestigt werden. Der maximale Neigungswinkel □ der Suprakonstruktion 3 gegen den Implantatadapter 4 beträgt in Figur 1 2°. Innerhalb dieses Winkelbereichs von 0° bis 2° wird die Außenkante der apikalen konkaven Oberfläche der Suprakonstruktion 3 vollumfänglich auf der koronalen konvexen Oberfläche des Implantatadapters 4 liegen und bildet dort eine Schneidkante 5.

Die koronale Oberfläche der Suprakonstruktion 3, auf die der Schraubenkopf 6 der Schraube 2 geschraubt wird, wird durch eine konvexe Kugeloberfläche mit dem Radius R3 realisiert. Die Unterseite des Schraubenkopfs 6 ist eine konkave Kugeloberfläche mit dem gleichen Krümmungsradius R3. Dadurch kann die Schraube 2 beziehungsweise die Unterseite des Schraubenkopfs 6 flächig auf der Oberseite der Suprakonstruktion 3 angezogen werden. Es ergibt sich also eine stabile flächige Verbindung zwischen der Schraube 2, der Suprakonstruktion 3 und dem Schaft 1 mit dem Implantatadapter 4 unabhängig von dem Winkel □ der Suprakonstruktion 3 zu dem Implantatadapter 4.

Die Kugeloberflächen sind genaugenommen und im Sinne der gesamten vorliegenden Erfindung Teile einer Kugeloberfläche. Die genannten Kugeloberflächen bilden also Teilflächen von Kugeln mit den Radien R1, R2 oder R3. Der Krümmungsradius R1 der koronalen Oberfläche des Implantatadapters 4 beträgt beispielsweise 70 mm. Der Krümmungsradius R2 der apikalen Oberfläche der Suprakonstruktion 3 beträgt beispielsweise 60 mm. Die Krümmungsradien R3 der koronalen Oberfläche der Suprakonstruktion 3 und der Unterseite des Schraubenkopfs 6 beträgt beispielsweise 100 mm.

Beim Anziehen der Schraube 2 wird die Schneidkante 5 der Suprakonstruktion 3 in die koronale Oberfläche des Implantatadapters 4 einschneiden und so eine feste und dichte Verbindung der beiden Bauteile ermöglichen. Um das Einschneiden zu erleichtern, ist die Suprakonstruktion 3 aus einem härteren Material aufgebaut als der Implantatadapter 4. Beispielsweise kann die Suprakonstruktion 3 aus einer Titan-Legierung (zum Beispiel eine harte "Grade 5" Titan-Legierung) bestehen und der Implantatadapter 4 aus reinem Titan oder einer weicheren Titan-legierung (zum Beispiel eine weichere "Grade 2" Titan-Legierung).

Die Position der Schneidkante 5 wird sich also abhängig vom Winkel der Suprakonstruktion 3 zum Implantatadapter 4 ausbilden. Mit dem gezeigten erfindungsgemäßen Dentalimplantat können also verschiedene Winkel der Suprakonstruktion 3 zum Implantatadapter 4 und damit zum Schaft 1 realisiert werden, ohne dass hierfür irgend ein Klebstoff oder ein Zement verwendet werden müsste.

### Bezugszeichenliste

- 1: Schaft
- 2: Schraube
- 3: Suprakonstruktion
- 4: Implantatadapter
- 5: Schneidkante
- 6: Schraubenkopf

## Patentansprüche

1. Dentalimplantat umfassend einen Implantatadapter (4) und eine Suprakonstruktion (3), wobei der Implantatadapter (4) koronal zumindest bereichsweise gewölbt ist und die Suprakonstruktion (3) apikal zumindest bereichsweise gewölbt ist, wobei die apikale Krümmung der Suprakonstruktion (3) konvex ist und die koronale Krümmung des Implantatadapters (4) konkav ist oder die apikale Krümmung der Suprakonstruktion (3) konkav ist und die koronale Krümmung des Implantatadapters (4) konvex ist, wobei die konkave Krümmung stärker als die konvexe Krümmung ist, und wobei
die gekrümmten Oberflächen einen unterschiedlichen Durchmesser aufweisen, so dass beim aufgebauten Dentalimplantat der äußere Rand der Oberfläche mit dem kleineren Durchmesser als Schneidkante (5) in die Oberfläche mit dem größeren Durchmesser einschneidet, so dass beim aufgebauten Dentalimplantat die Suprakonstruktion (3) mit dem Implantatadapter (4) über eine Schneidkante (5) verbunden ist.

2. Dentalimplantat nach Anspruch 1, **dadurch gekennzeichnet, dass**
die konvexe Krümmung mit einem ersten Radius R1 konvex gewölbt ist und die konkave Krümmung mit einem zweiten Radius R2 konkav gewölbt ist, wobei der erste Radius R1 größer als der zweite Radius R2 Ist.

3. Dentalimplantat nach Anspruch 1 oder 2, **dadurch gekennzeichnet, dass**
die konvexe Krümmung eine konvexe Kugeloberfläche mit dem ersten Radius R1 ist und die konkave Krümmung eine konkave Kegeloberfläche mit dem zweiten Radius R2 ist.

4. Dentalimplantat nach einem Ansprüche 2 oder 3, **dadurch gekennzeichnet, dass**
die Radien R1 und R2 zwischen 1 mm und 500 mm sind, vorzugsweise zwischen 1,5 mm und 300 mm, besonders bevorzugt zwischen 6 mm und 100 mm.

5. Dentalimplantat nach einem Ansprüche 2, 3 oder 4, **dadurch gekennzeichnet, dass**
das Verhältnis der Radien R1 zu R2 kleiner als 2:1 ist, vorzugsweise im Bereich von 20:19 bis 2:1 liegt, besonders bevorzugt im Bereich von 10:9 bis 4:3, ganz besonders bevorzugt das Verhältnis der Radien R1 zu R2 7:6 ist.

6. Dentalimplantat nach einem der vorangehenden Ansprüche, **dadurch gekennzeichnet, dass** der äußere Rand der konkaven gekrümmten Oberfläche einen kleineren Durchmesser als der äußere Rand der konvexen Oberfläche aufweist, wobei der äußere Rand der konkaven gekrümmten Oberfläche die Schneidkante (5) auf der konvexen Oberfläche bildet.

7. Dentalimplantat nach einem der vorangehenden Ansprüche, **dadurch gekennzeichnet, dass**
der Implantatadapter (4) mit der konvexen koronalen Oberfläche aus einem weicheren Material besteht als die Suprakonstruktion (3) oder die Suprakonstruktion (3) mit der konvexen apikalen Oberfläche aus einem weicheren Material besteht als der Implantatadapter (4).

8. Dentalimplantat nach einem der vorangehenden Ansprüche, **dadurch gekennzeichnet, dass**
der Implantatadapter (4) und/oder die Suprakonstruktion (3) aus einer Kobalt-Chrom-Legierung, Titan, einer Titanlegierung und/oder einer Keramik, insbesondere aus einer Zirkonoxid-Keramik, besteht oder bestehen.

9. Dentalimplantat nach einem der vorangehenden Ansprüche, **dadurch gekennzeichnet, dass**
das Dentalimplantat einen Schaft (1) zum Implantieren in den Kieferknochen umfasst, wobei der Implantatadapter (4) auf den Schaft (1) aufsetzbar ist oder mit dem Schaft (1) verbindbar ist oder mit dem Schaft (1) fest verbunden ist oder mit dem Schaft (1) in einem Teil ausgeführt ist.

10. Dentalimplantat nach einem der vorangehenden Ansprüche, **dadurch gekennzeichnet, dass**
das Dentalimplantat eine Schraube (2) zum Verbinden der Suprakonstruktion (3) mit dem Implantatadapter (4) umfasst, wobei die Schraube (2) ein Gewinde zum Eingreifen in ein Gegengewinde umfasst, wobei vorzugsweise das Gegengewinde als Innengewinde im Schaft (1) angeordnet Ist, und die Suprakonstruktion (3) und der Implantatadapter (4) eine Durchführung für die Schraube (2) umfasst, wobei bevorzugt zumindest der Durchmesser der Durchführung in der Suprakonstruktion (3) größer als der Durchmesser der Schraube (2) im Bereich des Gewindes und kleiner als der Durchmesser eines Schraubenkopfs (6) der Schraube (2) ist.

11. Dentalimplantat nach Anspruch 10, **dadurch gekennzeichnet, dass**
die Suprakonstruktion (3) eine konvexe koronale Kugelfläche mit einem Radius R3 umfasst und die Schraube (2) an der Unterseite des Schraubenkopfs (6) eine konkave Kugelfläche mit dem gleichen Radius R3 aufweist, so dass ein flächiger Kontakt der Unterseite des Schraubenkopfs (6) mit der koronalen Kugelfläche der Suprakonstruktion (3) bei verschiedenen Winkeln der Suprakonstruktion (3) gegenüber dem Implantatadapter (4) herstellbar ist.

12. Dentalimplantat nach einem der vorangehenden Ansprüche, **dadurch gekennzeichnet, dass**
beim Aufbau des Dentalimplantats ein Winkel zwischen dem Implantatadapter (4) und der Suprakonstruktion (3) und/oder dem Schaft (1) und der Suprakonstruktion (3) von 0° bis 5° einstellbar ist, vorzugsweise von 0° bis 4°, besonders bevorzugt von 0° bis 3°, ganz besonders bevorzugt von 0° bis 2°.

## Claims

1. Dental implant comprising an implant adapter (4) and a superstructure (3), wherebythe implant adapter (4) is coronally arched in at least some sections and the superstructure (3) is apically arched in at least some sections, whereby the apical curvature of the superstructure (3) is convex and the coronal curvature of the implant adapter (3) is concave or the apical curvature of the superstructure (3) is concave and the coronal curvature of the implant adapter (4) is convex, whereby the concave curvature is more pronounced than the convex curvature, and whereby the curved surfaces comprise different diameters, such that, in the assembled dental implant, the external edge of the surface having the smaller diameter cuts as a cutting edge (5) into the surface having the larger diameter, such that, in the assembled dental implant, the superstructure (3) is connected to the implant adapter (4) by a cutting edge (5).

2. Dental implant according to claim 1, **characterised in that** the convex curvature is arched to be convex at a first radius R1 and the concave curvature is arched to be concave at a second radius R2, whereby the first radius R1 is larger than the second radius R2.

3. Dental implant according to claim 1 or 2, **characterised in that** the convex curvature is a convex spherical surface having the first radius R1 and the concave curvature is a concave spherical surface having the second radius R2.

4. Dental implant according to any one of the claims 2 or 3, **characterised in that** the radius R1 and R2 are between 1 mm and 500 mm, preferably between 1.5 mm and 300 mm, particularly preferably between 5 mm and 100 mm.

5. Dental implant according to any one of the claims 2, 3 or 4, **characterised in that** the ratio of radii R1 to R2 is less than 2:1, preferably in the range of 20:19 to 2:1, more particularly preferably the ratio of radii R1 to R2 is 7:6.

6. Dental implant according to any one of the preceding claims, characterised in thatthe external edge of the surface having the concave curvature has a smaller diameter than the external edge of the convex surface, whereby the external edge of the surface having the concave curvature forms the cutting edge (5) on the convex surface.

7. Dental implant according to any one of the preceeding claims, characterised in thatthe implant adapter (4) having the convex coronal surface consists of a softer material than the superstructure (3) or the superstructure (3) having the convex apical surface consists of a softer material than the implant adapter (4).

8. Dental implant according to any one of the preceding claims, characterised in thatthe implant adapter (4) and/or the superstructure (3) consists or consist of a cobalt-chromium alloy, titanium, a titanium alloy and/or a ceramic, in particular of a zirconium oxide ceramic.

9. Dental material according to any one of the preceding claims, **characterised in that** the dental implant comprises a stem (1) for implanting into the jaw bone, whereby the implant adapter (4) is placeable on the stem (1) or connectable to the stem (1) or is firmly connected to the stem (1) or is designed to be the same part as the stem (1).

10. Dental implant according to any one of the preceding claims, **characterised in that** the dental implant comprises a screw (2) for connecting the superstructure (3) to the implant adapter (4), whereby the screw (2) comprises a thread for engaging an opposite thread, whereby the opposite thread preferably is arranged as internal thread in the stem (1), and the superstructure (3) and the implant adapter (4) comprise a feed through (4) for the screw (2), whereby, preferably, at least the diameter of the feed-through in the superstructure (3) is larger than the diameter of the screw (2) in the region of the thread and smaller than the diameter of a screw head (6) of the screw (2).

11. Dental implant according to claim 10, **characterised in that** the superstructure (3) comprises a convex coronal spherical surface having a radius R3 and the screw (2) has, on the underside of the screw head (6), a concave spherical surface having the same radius R3, such that a surface-to-surface contact of the underside of the screw head (6) to the coronal spherical surface of the superstructure (3) is producible at different angles of the superstructure (3) with respect to the implant adapter (4).

12. Dental implant according to any one of the preceding claims, **characterised in that** the assembly of the dental implant includes an angle between the implant adapter (4) and the superstructure (3) and/or the stem (1) and the superstructure (3) that is adjustable from 0° to 5°, preferably from 0° to 4°, particularly preferably from 0° to 3°, more particularly preferably from 0° to 2°.

## Revendications

1. Implant dentaire comprenant un adapteur d'implant (4) et une superstructure (3), selon lequel l'adapteur d'implant (4) est vouté coronalement au moins aux quelques sections et la superstructure (3) est voutée apicalement au moins aux quelques sections, selon lequel la courbure apicale de la superstructure (3) est convexe et la courbure coronale de l'adapteur d'implant (4) est concave ou la courbure apicale de la superstructure (3) est concave et la courbure coronale de l'adapteur d'implant (4) est convexe, selon lequel la courbure concave est plus prononcée que la courbure convexe, et selon lequel les surfaces courbées comprennent des diamètres différents, si bien que, à l'implant dentaire assemblé, le bord externe de la surface ayant le plus petit diamètre coupe comme une arête coupante (5) dans la surface ayant le plus grand diamètre, si bien que, à l'implant dentaire assemblé, la superstructure (3) est connectée avec l'adapteur d'implant (4) par une arête coupante (5).

2. Implant dentaire selon la revendication 1, **caractérisé en ce que** la courbure convexe est voutée convexement avec un premier rayon R1 et la courbure concave est voutée concavement avec un deuxième rayon R2, selon lequel le premier rayon R1 est plus grand que la deuxième rayon R2.

3. Implant dentaire selon la revendication 1 ou 2, **caractérisé en ce que** la courbure convexe est une surface sphérique convexe ayant le premier rayon R1 et la courbure concave est une surface sphérique concave ayant le deuxième rayon R2.

4. Implant dentaire selon la revendication 2 ou 3, **caractérisé en ce que** les rayons R1 et R2 sont entre 1 mm et 500 mm, de préférence entre 1.5 mm et 300 mm, de préférence particulière entre 5 mm et 100 mm.

5. Implant dentaire selon l'une quelconque des revendications 2, 3 ou 4, **caractérisé en ce que** le rapport des rayons R1 à R2 est inférieur à 2:1, de préférence dans la gamme de 20:19 à 2:1, de préférence plus particulière le rapport des rayons R1 à R2 est 7:6.

6. Implant dentaire selon l'une quelconque des revendications précédentes, **caractérisé en ce que** le bord externe de la surface ayant la courbure concave a un plus petit diamètre que le bord externe de la surface convexe, selon lequel le bord externe de la surface ayant la courbure concave forme l'arête coupante (5) sur la surface convexe.

7. Implant dentaire selon l'une quelconque des revendications précédentes, **caractérisé en ce que** l'adapteur d'implant (4) ayant la surface convexe coronale consiste en un matériau plus doux que la superstructure (3) ou la superstructure (3) ayant la surface convexe apicale consiste en un matériau plus doux que l'adapteur d'implant (4).

8. Implant dentaire selon l'une quelconque des revendications précédentes, **caractérisé en ce que** l'adapteur d'implant (4) et/ou la superstructure (3) consiste ou consistent en un alliage au cobalt-chrome, titane, un alliage titane est/ou une céramique, en particulier en une céramique d'oxyde à zirconium.

9. Implant dentaire selon l'une quelconque des revendications précédentes, **caractérisé en ce que** l'implant dentaire comprend une tige (1) pour implanter dans le mâchoire, selon lequel l'adapteur d'implant (4) est placéable sur la tige (1) ou connectable avec la tige (1) ou est connecté fermement avec la tige (1) ou est conçu pour être la même partie que la tige (1).

10. Implant dentaire selon l'une quelconque des revendications précédentes, **caractérisé en ce que** l'implant dentaire comprend une vis (2) pour connecter la superstructure (3) avec l'adapteur d'implant (4), selon lequel la vis (2) comprend un filetage pour engager un contre-filetage, selon lequel le contre-filetage est préférablement arrangé comme une filetage intérieur dans la tige (1), et la superstructure (3) et l'adapteur d'implant (4) comprennent une traversée pour la vis (2), selon lequel, de préférence, au moins le diamètre de la traversée dans la superstructure (3) est plus grand que le diamètre de la vis (2) à la région du filetage et plus petit que le diamètre d'une tête de vis (6) de la vis (2).

11. Implant dentaire selon la revendication 10, **caractérisé en ce que** la superstructure (3) comprend une surface sphérique convexe coronale ayant un rayon R3 et la vis (2) a, à la face inférieure de la tête de vis (6), une surface sphérique concave ayant le même rayon R3, si bien que un contact surfacique de la face inférieure de la tête de vis (6) avec la surface sphérique coronale de la superstructure (3) est fabricable en angles différents de la superstructure (3) à l'égard de l'adapteur d'implant (4).

12. Implant dentaire selon l'une quelconque des revendications précédentes, **caractérisé en ce que** l'assemblage de l'implant dentaire inclut un angle entre l'adapteur d'implant (4) et la superstructure (3) et /ou la tige (1) et la superstructure (3) qui est réglable de 0° à 5°, de préférence de 0° á 4°, de préférence particulière de 0° à 3°, de préférence plus particulière de 0° à 2°.
